# EUROPÄISCHE PATENTSCHRIFT

(11) **EP 3 793 806 B1**
(45) Veröffentlichungstag und Bekanntmachung des Hinweises auf die Patenterteilung: **30.08.2023**
(21) Anmeldenummer: 19737074.5
(22) Anmeldetag: 05.07.2019
(51) Int. Cl.: B29C 51/46, B29C 51/08, B29C 33/30

(54) **VERKIPPUNGSMESSUNG EINES THERMOFORMWERKZEUGES**
MESSURE OF THE INCLINAISON OF A THERMOFORMING MOULD
MESURE DE L'INCLINAISON D'UN MOULE DE THERMOFORMAGE

(30) Priorität: 18.07.2018 DE 102018117328
(43) Veröffentlichungstag der Anmeldung: 24.03.2021
(73) Patentinhaber: Marbach Werkzeugbau GmbH, 74080 Heilbronn (DE)
(72) Erfinder: WEIBLER, Klaus, 74626 Bretzfeld-Bitzfeld (DE)
(74) Vertreter: Lambacher, Michael
(86) Internationale Anmeldenummer: PCT/EP2019/068060
(87) Internationale Veröffentlichungsnummer: WO 2020/016024

(56) Entgegenhaltungen:
- EP-A1- 2 586 590
- WO-A1-2012/174657
- DE-A1-102016 103 237
- FR-A1- 2 794 055
- FR-B1- 2 794 055
- US-A1- 2001 053 395
- US-A1- 2007 218 157
- US-B2- 9 243 894

## Beschreibung

Die Erfindung betrifft Thermoformmaschinen zur Herstellung von becherförmigen Gegenständen aus einer erwärmten Kunststofffolie. Konkret wird ein Thermoformwerkzeug für eine derartige Thermoformmaschine beschrieben.

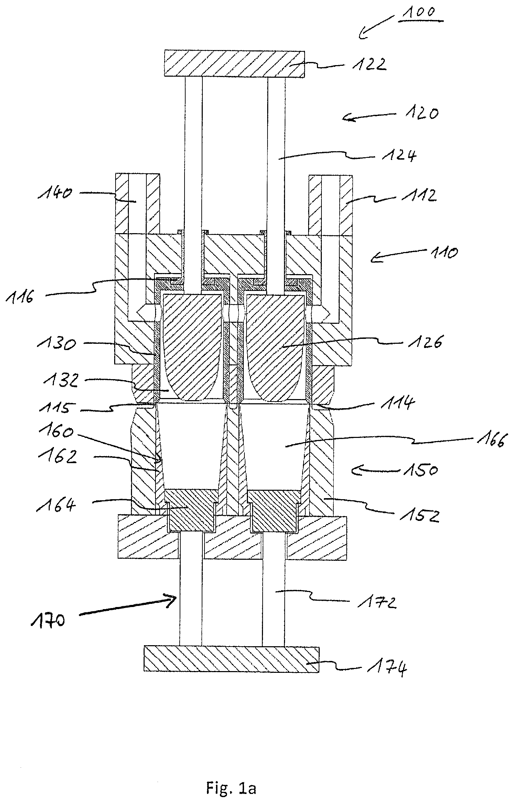

Thermoformwerkzeuge zur Herstellung von becherförmigen Gegenständen aus einer erwärmten Kunststofffolie sind hinreichend bekannt. Beispielhaft sei auf die DE 10 2016 103 237 A1 verwiesen. Der Aufbau eines derartigen Thermoformwerkzeuges soll im Zusammenhang mit Figur 1a näher erläutert werden. Figur 1a zeigt eine Querschnittansicht eines Thermoformwerkzeuges 100 für kombiniertes Formen und Stanzen zur Herstellung von becherförmigen Gegenständen aus einer Kunststofffolie. Das Thermoformwerkzeug 100 umfasst ein oberes Werkzeugteil 110 und ein unteres Werkzeugteil 150, die relativ zueinander bewegbar sind.

Das Thermoformwerkzeug 100 umfasst ferner wenigstens eine im unteren Werkzeugteil 150 aufgenommene Formeinrichtung 160 zur Ausformung becherförmiger Gegenstände (oder kurz Becher), wobei jede Formeinrichtung 160 einen Formeinsatz 162 und einen Formboden 164 umfasst, die gemeinsam einen Formraum 166 bilden. In Figur 1a sind exemplarisch zwei zueinander parallel angeordnete Formeinrichtungen 160 zu sehen. Der Formboden 164 einer jeden Formeinrichtung 160 ist mit einer Auswerfstange 172 und einer Auswerfleiste 174 einer Auswerfeinrichtung 170 gekoppelt, welche zum Auswerfen der becherförmigen Gegenstände vorgesehen ist. Ferner umfasst das untere Werkzeugteil 150 einen die wenigstens eine Formeinrichtung 160 umgebenden Kühlblock 152, welcher zur Kühlung der in der Formeinrichtung 160 ausgeformten Becher vorgesehen ist.

Das Thermoformwerkzeug 100 weist wenigstens eine Ausnehmung 116 auf, welche im oberen Werkzeugteil 110 koaxial zur Formeinrichtung 160 angeordnet ist und zum unteren Werkzeugteil 150 hin offen ausgebildet ist. In Figur 1a sind exemplarisch wiederum zwei Ausnehmungen 116 zu sehen, welche zu den zwei Formeinrichtungen 160 des unteren Werkzeugteiles 150 korrespondierend angeordnet sind. Jede Ausnehmung 116 ist zur Aufnahme eines Niederhalters 130 vorgesehen, der eine zum jeweiligen Formraum 166 des unteren Werkzeugteiles 150 hin offene Kavität 132 aufweist. Das Thermoformwerkzeug 100 umfasst ferner eine Vorstreckeinrichtung 120, eine Distanzleiste 112 und eine Schneidplatte 114. Die Vorstreckeinrichtung 120 umfasst einen für jede Kavität 132 bereitgestellten Vorstrecker 126 und eine mit jedem Vorstrecker 126 mechanisch gekoppelte Vorstreckerstange 124 und Vorstreckerplatte 122.

Der Vorstrecker 126 ist dazu ausgebildet, eine zwischen dem oberen Werkzeugteil 110 und dem unteren Werkzeugteil 150 (genauer gesagt zwischen der Kavität 132 und dem Formraum 166) angeordnete Kunststofffolie (in Figur 1a nicht dargestellt) in den Formraum 166 zu drücken, um so den Kunststoffbecher vorzuformen. Hierzu wird der Vorstrecker 126 nach Schließen des Werkzeuges von einer in Figur 1a gezeigten Ruhestellung, in welcher der Vorstrecker 126 innerhalb der Kavität 132 des Niederhalters 130 aufgenommen ist, in eine Streckstellung bewegt, in welcher der Vorstrecker 126 in den Formraum 166 hinein bewegt ist. Die Bewegungsteuerung des Vorstreckers 126 zwischen Ruhestellung und Streckstellung erfolgt mittels der Vorstreckerplatte 122.

Die Distanzleiste 112 ist dazu vorgesehen, bei Bedarf einen in der Thermoformmaschine fest vorgesehenen Einbauraum in Höhenrichtung zu überbrücken, wenn beispielsweise das obere Werkzeugteil 110 eine geringere Höhe aufweist, als der vorgesehene Einbauraum. Eine Schneidkante 115 im unteren Werkzeugteil 150 ist dazu vorgesehen, die so geformten Becher gegen die Schneidplatte 114 aus der Kunststofffolie auszustanzen.

Zur vollständigen Ausformung der Becher wird dem Formraum 166 über Belüftungskanäle 140 Druckluft bzw. Formluft zugeführt (sogenannte Belüftungsphase des Thermoformwerkzeuges 100), wodurch die vorgeformte Kunststofffolie gegen den Formeinsatz 162 und Formboden 164 gedrückt wird. Nach Beendigung des Formprozesses wird der Formraum entlüftet (sogenannte Entlüftungsphase) und die beiden Werkzeugteile 110, 150 auseinander bewegt, um die ausgeformten Becher auszustoßen und einen neuen Formprozess einzuleiten.

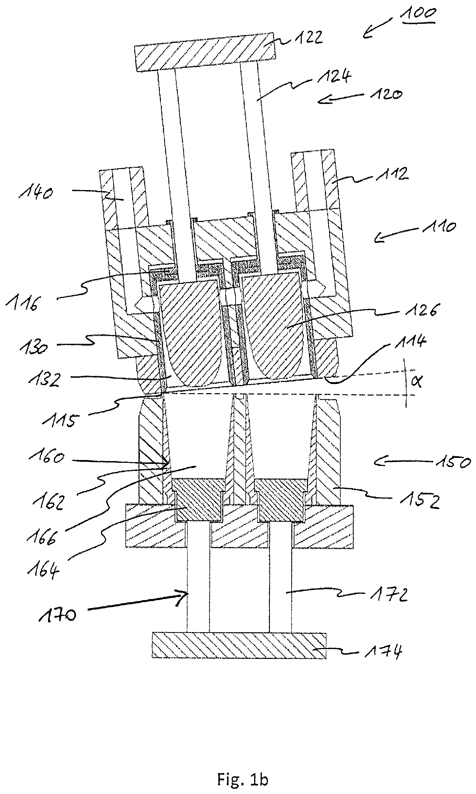

Bei der Durchführung des Formprozesses ist es wichtig, dass das obere Werkzeugteil 110 und das untere Werkzeugteil 150 möglichst parallel zueinander ausgerichtet sind. Weichen die Werkzeugteile 110, 150 von einer parallelen Ausrichtung ab, spricht man von einer Verkippung der Werkzeugteile 110, 150 zueinander. In Figur 1b ist das Thermoformwerkzeug gemäß Figur 1a dargestellt, wobei das obere Werkzeugteil 110 bezüglich des unteren Werkzeugteils 150 eine Verkippung aufweist. Der Grad (also das Ausmaß bzw. die Stärke) der Verkippung kann sich nach einem Verkippungswinkel α zwischen den Werkzeugteilen 110, 150 bestimmen. Je größer der Betrag des Verkippungswinkels α ist, desto negativer sind die daraus resultierenden Auswirkungen auf das Thermoformwerkzeug 100 und/oder den Formprozess. So kann eine Verkippung der Werkzeugteile 110, 150 beispielsweise negative Auswirkungen auf die Qualität der zu produzierenden Becher haben. Ferner kann eine Verkippung der Werkzeugteile 110, 150 zu einem erhöhten Verschleiß des Werkzeuges 100 führen (z.B. durch Metallkontakt zwischen Schneidkante 115 und Schneidplatte 114).

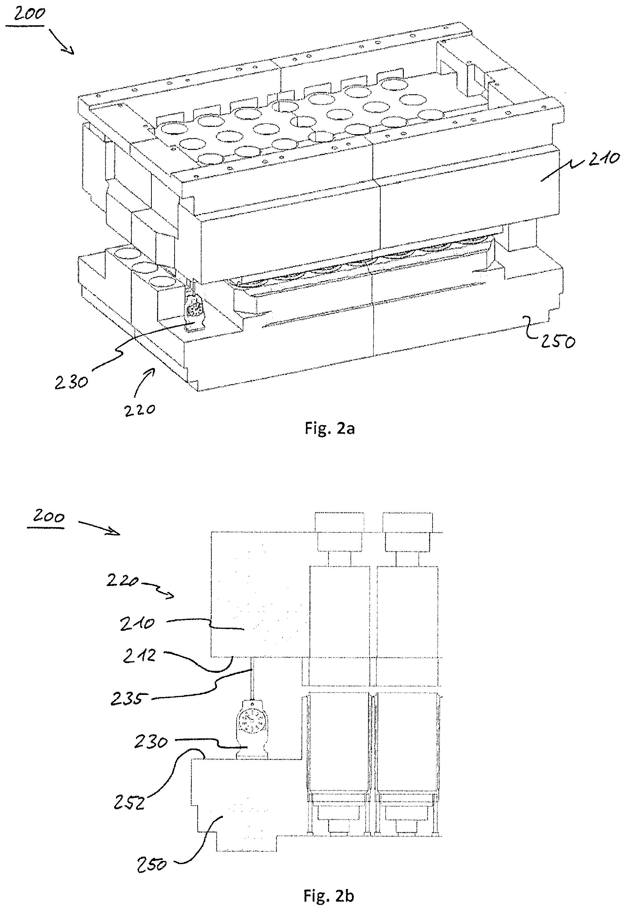

Um einer Verkippung vorzubeugen, sieht der Stand der Technik eine Parallelitätsmessung (bzw. Verkippungsmessung) der Werkzeugteile 110, 150 nach dem Einbau des Thermoformwerkzeuges in eine Thermoformmaschine und vor deren Inbetriebnahme vor. Für die Messung sind im Wesentlichen fünf Arbeitsschritte erforderlich, die im Folgenden in Zusammenhang mit den Figuren 2a und 2b näher erläutert werden.

Figur 2a zeigt ein Thermoformwerkzeug 200. Das Thermoformwerkzeug umfasst, entsprechend dem Thermoformwerkzeug 100 gemäß den Figuren 1a und 1b, ein oberes Werkzeugteil 210 und ein unteres Werkzeugteil 250. Das Thermoformwerkzeug 200 weist eine im Wesentlichen rechteckige Form auf. Figur 2b zeigt einen Ausschnitt an einer ersten Ecke 220 des in Figur 2a dargestellten Thermoformwerkzeuges 200 in Schnittdarstellung.

Zum Messen der Verkippung der Werkzeugteile 210, 250 zueinander verwendet ein Bediener in einem ersten Arbeitsschritt eine mechanische Messuhr 230, um an der ersten Ecke 220 des Thermoformwerkzeuges 200 den Abstand zwischen den Werkzeugteilen 210, 250 zu messen. Dabei wird die Messuhr 230, wie in Figur 2b dargestellt, auf einer Messfläche 252 des unteren Werkzeugteiles 250 positioniert und ein federgelagerter Messstab 235 der Messuhr 230 mit einer Messfläche 212 des oberen Werkzeugteiles 210 in Kontakt gebracht. Der dabei gemessene Abstand zwischen den Werkzeugteilen 210, 250 wird in einem zweiten Arbeitsschritt als Referenzabstand festgelegt und genullt. In einem dritten Arbeitsschritt misst der Bediener die Abstände zwischen den Werkzeugteilen 210, 250 in wenigstens zwei weiteren Ecken des Thermoformwerkzeuges 200. In einem vierten Arbeitsschritt werden die Abweichungen der gemessenen Abstandswerte zu dem erstgemessenen Referenzwert ermittelt und aus diesen Abweichungen in einem fünften Arbeitsschritt ein Wert für die Verkippung der Werkzeugteile 210, 250 zueinander berechnet. Übersteigt dieser Wert einen vorbestimmten kritischen Grenzwert, so muss die Lage der Werkzeugteile 210, 250 zueinander vor Inbetriebnahme der Thermoformmaschine korrigiert werden.

Ein Nachteil dieser manuellen Messmethode besteht darin, dass die Verkippung der Werkzeugteile 210, 250 nur bei Maschinenstillstand (also vor Inbetriebnahme) bestimmt werden kann. Während des Betriebs der Thermoformmaschine, kann die Verkippung der Werkzeugteile 210, 250 nicht überwacht werden. Sollte sich die Lage der Werkzeugteile 210, 250 zueinander während des Betriebs der Maschine ändern (etwa durch externe Krafteinwirkung), kann also nicht reagiert werden, da die Änderung nicht erkannt wird. Zudem ist die oben beschriebene Messmethode zeitaufwendig.

Ferner ist aus der WO 2012/174657 A1 eine Formmaschine bekannt, die einen stationären Tiegel sowie einen beweglichen Tiegel umfasst. Ein Formwerkzeug kann zwischen den Auflageflächen des beweglichen Tiegels und des stationären Tiegels angeordnet sein. Um die Parallelität der Auflageflächen der beiden Tiegel zu erfassen, wird eine Axialabweichung einer Einspannsäule mit Hilfe eines Proximity-Sensors oder Lasers gemessen. Die gemessene Ablenkung der Einspannsäule von einer zentralen Mittelachse ist ein Maß dafür, wie stark die Tiegelauflageflächen von einer parallelen Ausrichtung abweichen.

Ferner ist aus der US 2007/0218157 A1 eine Formvorrichtung bekannt, die zwei Werkzeugteile aufweist. Die Formvorrichtung weist ferner eine optische Ausrichtungsanordnung auf (siehe beispielsweise Einrichtung 30 mit den Elementen 31 und 32 in den Figuren 1 und 2), welche dazu ausgebildet ist, anzuzeigen, ob die beiden Werkzeugteile horizontal zueinander ausgerichtet sind. Die Ausrichtungsanordnung der US 2007/0218157 A1 ist jedoch nicht zur Erfassung der Parallelität der beiden Werkzeugteile zueinander ausgelegt.

In der US 7,753,668 B2 wird in Zusammenhang mit Spritzgussmaschinen eine Technik zum Messen der Verkippung der beiden Werkzeughälften der Spritzgussmaschine beschrieben. Hierbei werden an den Werkzeughälften oder an den Montageplatten für die Werkzeughälften Neigungssensoren angebracht, die auf einwirkende Bewegungskräfte bzw. die auf die Werkzeughälften einwirkende Schwerkraft sensitiv sind und dadurch die Messung des Verkippungsgrades einer jeden Werkzeughälfte für sich ermöglichen.

Aufgabe der vorliegenden Erfindung ist es, die Messung der Verkippung zwischen Werkzeugteilen von Thermoformwerkzeugen zu verbessern. Insbesondere soll durch die vorliegende Erfindung eine Möglichkeit geschaffen werden, eine Verkippungsmessung von Werkzeugteilen eines Thermoformwerkzeuges auch während des Thermoformprozesses durchzuführen. Ferner soll die Geschwindigkeit der Verkippungsmessung gesteigert werden.

Zur Lösung der der Erfindung zugrundeliegenden Aufgabe wird ein Thermoformwerkzeug zur Herstellung von becherförmigen Gegenständen aus einer erwärmten Kunststofffolie bereitgestellt. Das Thermoformwerkzeug umfasst ein erstes Werkzeugteil und ein zweites Werkzeugteil, die relativ zueinander bewegbar sind, wobei in einem der beiden Werkzeugteile wenigstens ein Formraum zur Formung eines becherförmigen Gegenstandes ausgebildet ist. Das Thermoformwerkzeug umfasst ferner eine Messeinrichtung, die dazu ausgebildet ist, eine Verkippung des ersten und des zweiten Werkzeugteiles zueinander zu ermitteln.

Die Messeinrichtung kann dazu ausgebildet sein, die Verkippung der beiden Werkzeugteile zueinander im Stillstand des Thermoformwerkzeugs und/oder während des Betriebs des Thermoformwerkzeugs (in Echtzeit) zu ermitteln.

Das erste Werkzeugteil kann ein oberes Werkzeugteil und das zweite Werkzeugteil kann ein unteres Werkzeugteil des Thermoformwerkzeuges sein. Das erste Werkzeugteil kann starr in einer Thermoformmaschine (d.h. unbeweglich bezüglich eines Rahmens der Thermoformmaschine gelagert) eingebaut sein. Das zweite Werkzeugteil kann bewegbar in der Thermoformmaschine angeordnet sein. Der Formraum zur Formung des becherförmigen Gegenstandes kann in dem zweiten Werkzeugteil ausgebildet sein. Mit becherförmiger Gegenstand kann ein Becher und/oder ein Deckel gemeint sein.

Die Messeinrichtung des Thermoformwerkzeuges umfasst wenigstens einen Sensor, wobei der wenigstens eine Sensor an einem der beiden Werkzeugteile angeordnet ist und dazu ausgebildet ist, wenigstens einen Messwert zu erfassen, der auf eine Verkippung des ersten Werkzeugteiles und des zweiten Werkzeugteiles zueinander hinweist. Insbesondere kann der wenigstens eine Sensor fest an einem der beiden Werkzeugteile montiert sein. Somit kann der wenigstens eine Sensor permanent (also auch während eines Thermoformprozesses) in einem der beiden Werkzeugteile angebracht sein.

Gemäß einer Variante kann das Thermoformwerkzeug einen einzigen Sensor umfassen. Der eine Sensor kann dazu ausgebildet ist, einen Messwert zu erfassen, der unmittelbar (d.h. ohne zusätzliche Sensordaten eines anderen Sensors) auf eine Verkippung der beiden Werkzeugteile zueinander hinweist. Der eine Sensor kann in Form eines 3D-Scanners implementiert sein.

Gemäß einer alternativen Variante kann die Messeinrichtung wenigstens zwei voneinander beabstandet angeordnete Sensoren umfassen. insbesondere kann die Messeinrichtung wenigstens drei voneinander beabstandet angeordnete Sensoren umfassen. Die wenigstens zwei bzw. wenigstens drei Sensoren können dazu ausgebildet sein, einen Abstand zwischen dem ersten Werkzeugteil und dem zweiten Werkzeugteil an voneinander verschiedenen Messstellen zu messen. Die verschiedenen Messstellen können sich jeweils in unterschiedlichen Eckbereichen des Thermoformwerkzeuges befinden.

Jeder des wenigstens einen Sensors kann an demselben Werkzeugteil angeordnet sein. Insbesondere kann jeder des wenigstens einen Sensors an dem ersten Werkzeugteil angeordnet sein. Die Anordnung des Sensors/der Sensoren in dem ersten Werkzeugteil kann insbesondere dann vorteilhaft sein, wenn das erste Werkzeugteil in einer Thermoformmaschine unbeweglich in einer Thermoformmaschine gelagert ist. So kann die Gefahr von Störungen des Sensors bzw. der Sensoren durch Erschütterung reduziert werden. Ferner kann der wenigstens eine Sensor kabelgebunden sein. Im Falle eines kabelgebundenen Sensors kann eine umständliche Nachführung der Verkabelung durch Anordnung des wenigstens einen Sensors an dem fixierten ersten Werkzeugteil vermieden werden.

Die Messeinrichtung umfasst ferner wenigstens ein dem wenigstens einen Sensor zugeordnetes Referenzelement. Das wenigstens eine Referenzelement ist an dem dem jeweiligen Sensor gegenüberliegenden Werkzeugteil angeordnet sein. Der wenigstens eine Sensor ist dazu ausgebildet, den wenigstens einen Messwert bezüglich des wenigstens einen Referenzelements zu erfassen.

Das wenigstens eine Referenzelement kann fest an dem entsprechenden Werkzeugteil montiert sein. Als Referenzelement kann ein Oberflächenabschnitt des entsprechenden Werkzeugteiles fungieren, an dem das Referenzelement angeordnet ist. Alternativ kann das Referenzelement ein an oder in dem entsprechenden Werkzeugteil (fest) montiertes Metallobjekt sein, das als Referenz zur Abstandsmessung mittels eines induktiven Sensors dient. Gemäß einer weiteren alternativen Variante kann das Referenzelement ein Spiegel bzw. eine reflektierende Oberfläche sein, wenn der wenigstens eine Sensor ein optischer Sensor ist. Gemäß noch einer weiteren alternativen Variante kann das Referenzelement ein beliebiges Referenzobjekt sein, das mit einer bestimmten Sensorart korrespondiert, sodass durch den wenigstens einen entsprechenden Sensor wenigstens ein Messwert erfasst werden kann, der auf eine Verkippung der Werkzeugteile zueinander hinweist.

Gemäß einer bevorzugten Variante kann die Messeinrichtung wenigstens zwei Sensoren und wenigstens zwei Referenzelemente umfassen. Jeder der wenigstens zwei Sensoren kann dazu ausgebildet sein, einen Abstand zu jenem Referenzelement zu messen, dem er zugeordnet ist. Die wenigstens zwei Sensoren können vorzugsweise voneinander beabstandet an dem entsprechenden Werkzeugteil angeordnet sein. Die Messeinrichtung kann ferner dazu ausgebildet sein, aus den Abständen der wenigstens zwei Sensoren zueinander und den Abständen der Sensoren zu den korrespondierenden Referenzelementen die Verkippung der Werkzeugteile zueinander zu berechnen.

Alternativ zu einem Abstandswert kann der Messwert ein Wert sein, der unmittelbar auf die Lage (und somit auch auf die Verkippung) der Werkzeugteile zueinander hinweist. Ein solcher Wert kann durch einen Flächenscan eines 3D-Sensors (3D-Scanner) erfasst werden.

Jeder des wenigstens einen Sensors (bzw. jeder der wenigstens zwei Sensoren) kann ein induktiver, kapazitiver oder optischer Sensor sein. Alternativ kann der wenigstens eine Sensor ein 3D-Scanner (d.h. eine Kamera), ein mechanischer Sensor (z.B. mit federgelagertem Messstab), ein Schallsensor, ein Wirbelstromsensor, ein magnetoresistiver Sensor, ein piezo-elektrischer Sensor oder ein Drucksensor sein. Beispielsweise kann die Messeinrichtung wenigstens zwei Sensoren umfassen, wobei jeder der Sensoren ein Drucksensor ist, der dazu ausgebildet ist, einen Druck in Zylinderräumen zu messen. Der Druck in den Zylinderräumen entsteht durch die Betätigung einer Hydraulik zur Bewegung wenigstens eines der Werkzeugteile. Die unterschiedlichen Drücke in den Zylindern an verschiedenen Ecken des Thermoformwerkzeuges können Rückschlüsse auf die Verkippung der Werkzeugteile zulassen.

Jeder des wenigstens einen Sensors kann ferner dazu ausgebildet sein, zusätzlich zu den auf eine Verkippung hinweisenden Messwerten, weitere Prozessparameter zu messen. Beispielsweise kann wenigstens einer der Sensoren dazu ausgebildet sein, zusätzliche Messwerte aufzunehmen, die auf eine Taktzahl des Formprozesses und/oder eine Schnitttiefe einer Schneidkante des Thermoformwerkzeuges hinweisen. Alternativ können die Messwerte, die auf eine Verkippung hinweisen über die Zeit kontinuierlich erfasst und ausgelesen werden. Aus diesen kontinuierlich ausgelesenen Messwerten kann indirekt eine Taktzahl des Formprozesses ermittelt werden. Die Taktzahl des Formprozesses kann beispielsweise über die Geschwindigkeit der Hubzyklen von Zylindern erfasst werden, die die beiden Werkzeugteile aufeinander zu und voneinander weg bewegen. Eine Schnitttiefe der Schneidkante kann beispielsweise aus einem Hubweg der Zylinder abgeleitet werden.

Die Messeinrichtung des Thermoformwerkzeuges kann eine Auswerteeinrichtung umfassen, die dazu ausgebildet ist, anhand des wenigstens einen Messwertes, die Verkippung der beiden Werkzeugteile zueinander zu ermitteln. Die Auswerteeinrichtung kann wenigstens einen Prozessor umfassen, der dazu ausgebildet ist, die von dem wenigstens einen Sensor bereitgestellten Messwerte zu verarbeiten. Die Verkippung kann durch einen Zahlenwert (z.B. ein Abstandswert oder eine Gradzahl) beschrieben werden. Insbesondere kann die Verkippung gemäß einer Variante durch eine Abweichung eines Abstandes zwischen den Werkzeugteilen an einer Stelle des Thermoformwerkzeuges von dem Abstand zwischen den Werkzeugteilen an einer anderen Stelle des Werkzeuges beschrieben werden. In diesem Falle kann die Auswerteeinrichtung dazu ausgebildet sein, zu bestimmen, dass eine kritische Verkippung der beiden Werkzeugteile vorliegt, wenn die Abstandsabweichung einen festgelegten kritischen Wert erreicht oder überschreitet. Gemäß einer alternativen Variante kann die Verkippung durch Angabe eines Verkippungswinkels α (bzw. Betrag des Verkippungswinkels α) zwischen dem ersten Werkzeugteil und dem zweiten Werkzeugteil beschrieben werden. In diesem Falle kann die Auswerteeinrichtung dazu ausgebildet sein, den Verkippungswinkel α mit einem vorbestimmten kritischen Verkippungswinkel αₖᵣᵢₜ zu vergleichen. Die Auswerteeinrichtung kann dazu ausgebildet sein, zu bestimmen, dass eine kritische Verkippung der beiden Werkzeugteile vorliegt, wenn der Verkippungswinkel α größer oder gleich dem kritischen Verkippungswinkel αₖᵣᵢₜ ist. Der kritische Verkippungswinkel αₖᵣᵢₜ kann 0,1° betragen.

Das Thermoformwerkzeug kann eine optische oder akustische Ausgabeeinrichtung umfassen, die mit der Messeinrichtung in Verbindung steht. Die Ausgabeeinrichtung kann dazu ausgebildet sein, ein optisches oder akustisches Warnsignal auszugeben, wenn eine kritische Verkippung der Werkzeugteile von der Auswerteeinrichtung der Messeinrichtung bestimmt wurde. Die Ausgabeeinrichtung kann eine Sirene umfassen, die ein Warngeräusch ausgibt, wenn eine kritische Verkippung der Werkzeugteile bestimmt wurde. Alternativ oder zusätzlich kann die Ausgabeeinrichtung eine Warnleuchte umfassen, die ein Warnlicht ausgibt, wenn eine kritische Verkippung der Werkzeugteile bestimmt wurde. Ferner kann in dem Fall, dass eine kritische Verkippung ermittelt wurde, die Thermoformmaschine, in die das Thermoformwerkzeug eingebaut ist, abgeschaltet werden, um die Lage der Werkzeugteile zueinander zu korrigieren.

Die Messeinrichtung des Thermoformwerkzeuges kann eine Kommunikationsschnittstelle umfassen, um einen Datentransfer zwischen der Messeinrichtung und einem Benutzerendgerät zu ermöglichen. Das Benutzerendgerät kann ein stationärer oder portabler Personal Computer (PC) sein. Alternativ kann das Benutzerendgerät ein Tablet, ein Smartphone oder aber ein anderes Gerät sein, das zur Anzeige der gemessenen Daten geeignet ist. Über die Kommunikationsschnittstelle können die Messdaten der Sensoren kontinuierlich oder in vorgegebenen Zeitintervallen an einen Bediener übermittelt werden. Dieser kann dann entscheiden, ob eine Lage- bzw. Positionierungskorrektur der Werkzeugteile zueinander vorgenommen werden muss, oder nicht.

Zur Lösung der der Erfindung zugrunde liegenden Aufgabe wird ferner eine Thermoformmaschine zur Herstellung von becherförmigen Gegenständen aus einer erwärmten Kunststofffolie bereitgestellt. Die Thermoformmaschine umfasst das Thermoformwerkzeug gemäß einer der oben beschriebenen Varianten. Ferner kann die Thermoformmaschine eine Steuereinheit zur Ansteuerung der Messeinrichtung umfassen. Die Steuereinrichtung kann sich an der Thermoformmaschine befinden. Alternativ kann die Steuereinrichtung als externe Steuereinrichtung implementiert sein (z.B. als ein externer Computer).

Die Steuereinheit kann eine Eingabeeinrichtung umfassen. Über die Eingabeeinrichtung kann ein Bediener Steuerbefehle an die Messeinrichtung senden. Die Eingabeeinrichtung kann ein Benutzerendgerät, wie etwa ein PC, ein Tablet oder ein Smartphone sein. Die Steuereinheit kann dazu ausgebildet sein, Befehle zum Festlegen der kritischen Verkippung (z.B. des kritischen Verkippungswinkels αₖᵣᵢₜ) an die Messeinrichtung des Thermoformwerkzeuges zu senden. Insbesondere kann die kritische Verkippung bzw. ein Wert für die kritische Verkippung (z.B. der kritische Verkippungswinkel (αₖᵣᵢₜ) je nach Implementierung der Thermoformmaschine und/oder des Thermoformwerkzeuges eingestellt werden (z.B. in einem Bereich von 0,001° ≤ αₖᵣᵢₜ ≤ 0,1°).

Zur Lösung der der Erfindung zugrunde liegenden Aufgabe wird ferner ein Verfahren zum Bestimmen einer Verkippung zwischen einem ersten und einem zweiten Werkzeugteil eines Thermoformwerkzeuges bereitgestellt. Das Verfahren umfasst die folgenden Verfahrensschritte: Bereitstellen einer Messeinrichtung an dem Thermoformwerkzeug, wobei der Schritt des Bereitstellens der Messeinrichtung ein Anbringen wenigstens eines Sensors an einem der beiden Werkzeugteile umfasst; Erfassen, mittels des wenigstens einen Sensors der Messeinrichtung, wenigstens eines Messwertes, der auf die Verkippung zwischen dem ersten Werkzeugteil und dem zweiten Werkzeugteil hinweist, wobei der Schritt des Erfassens des wenigstens einen Messwertes bezüglich wenigstens eines Referenzelementes erfolgt, das an dem dem jeweiligen Sensor gegenüberliegenden Werkzeugteil angeordnet ist; und Ermitteln, basierend auf dem wenigstens einen erfassten Messwert der Messeinrichtung, der Verkippung (d.h. eines auf die Verkippung hinweisenden Wertes) der beiden Werkzeugteile zueinander.

Das Verfahren kann mittels eines Thermoformwerkzeuges gemäß einer der oben beschriebenen Varianten implementiert werden.

Der Schritt des Bereitstellens der Messeinrichtung umfasst ein Anbringen wenigstens eines Sensors an einem der Werkzeugteile. Insbesondere kann der Schritt des Bereitstellens der Messeinrichtung ein festes Montieren des wenigstens einen Sensors an einem der Werkzeugteile umfassen. Das feste Montieren kann zu einer permanenten Lagerung des wenigstens einen Sensors in dem entsprechenden der beiden Werkzeugteile führen. Ferner umfasst der Schritt des Bereitstellens der Messeinrichtung ein Anbringen wenigstens eines Referenzelements an dem einem jeweiligen Sensor gegenüberliegenden Werkzeugteil. Das Anbringen des wenigstens einen Referenzelements kann ein festes Montieren des Referenzelements an dem entsprechenden Werkzeugteil umfassen.

Der Schritt des Erfassens des wenigstens einen Messwertes erfolgt bezüglich des wenigstens einen Referenzelementes, das an dem dem jeweiligen Sensor gegenüberliegenden Werkzeugteil angeordnet ist. Ferner kann der Schritt des Erfassens des wenigstens einen Messwertes induktiv, kapazitiv oder optisch erfolgen. Gemäß einer alternativen Variante kann der Schritt des Erfassens des wenigstens einen Messwertes mittels einer Flächenerfassung (3D-Scan mit einer Kamera), mechanisch, mittels Schallwellen, mittels Wirbelstrom, magnetoresistiv, piezo-elektrisch oder mittels Druckerfassung erfolgen.

Der Schritt des Ermittelns der Verkippung kann ein Vergleichen von wenigstens zwei Messwerten umfassen, die durch die Messeinrichtung bereitgestellt wurden. Die wenigstens zwei Messwerte können vorzugsweise von am Thermoformwerkzeug zueinander beabstandet angeordneten Sensoren stammen. Beispielsweise kann der Schritt des Ermittelns der Verkippung das Berechnen einer Abweichung zwischen den wenigstens zwei Messwerten umfassen. Alternativ oder zusätzlich kann der Schritt des Ermittelns der Verkippung das Berechnen eines Verkippungswinkels α zwischen den Werkzeugteilen umfassen.

Das Verfahren kann ferner wenigstens einen der folgenden Verfahrensschritte umfassen: Vergleichen der Verkippung (z.B. des berechneten Verkippungswinkels α) mit einer vorbestimmten kritischen Verkippung (z.B. einem kritischen Verkippungswinkel αₖᵣᵢₜ); Senden der berechneten Verkippung (z.B. des Verkippungswinkels α) an ein Benutzerendgerät; Ausgeben eines optischen oder akustischen Warnsignals, wenn die berechnete Verkippung (z.B. der berechnete Verkippungswinkel α) größer oder gleich der kritischen Verkippung (z.B. dem kritischen Verkippungswinkel αₖᵣᵢₜ) ist; und Anhalten des Betriebs der Thermoformmaschine, in die das Thermoformwerkzeug eingebaut ist, wenn die berechnete Verkippung (z.B. der berechnete Verkippungswinkel α) größer oder gleich der kritischen Verkippung (z.B. dem kritischen Verkippungswinkel αₖᵣᵢₜ) ist.

Das Verfahren zum Bestimmen der Verkippung zwischen dem ersten und dem zweiten Werkzeugteil des Thermoformwerkzeuges kann im Stillstand und/oder während des Betriebs des Thermoformwerkzeuges (d.h. während des Formprozesses) durchgeführt werden. Gemäß einer Variante kann die Verkippung der Werkzeugteile kontinuierlich während jedes Form- bzw. Stanzzykluses gemessen werden.

Die Verkippungsmessung während des Produktionsprozesses bietet erhebliche Vorteile gegenüber der manuellen Messmethodik gemäß dem eingangs beschriebenen Stand der Technik.

Weitere Einzelheiten und Vorteile der Erfindung werden anhand von Zeichnungen näher erläutert. Es zeigen:
- Figur 1a: eine Querschnittansicht eines Thermoformwerkzeuges gemäß dem Stand der Technik;
- Figur 1b: eine Querschnittansicht des Thermoformwerkzeuges gemäß Figur 1a, wobei das obere und das untere Werkzeugteil eine Verkippung zueinander aufweisen;
- Figur 2a: ein weiteres Thermoformwerkzeug mit einer externen Messuhr zur Verkippungsmessung gemäß dem Stand der Technik;
- Figur 2b: einen Ausschnitt des in Figur 2a dargestellten Thermoformwerkzeuges im Querschnitt zur Verdeutlichung der Messmethodik gemäß dem Stand der Technik;
- Figur 3: eine schematische Querschnittsdarstellung eines Ausschnitts eines Thermoformwerkzeuges gemäß der vorliegenden Erfindung; und
- Figur 4: ein Flussdiagramm zur Darstellung eines Verfahrens zum Bestimmen einer Verkippung zweier Werkzeugteile eines Thermoformwerkzeuges gemäß der vorliegenden Erfindung.

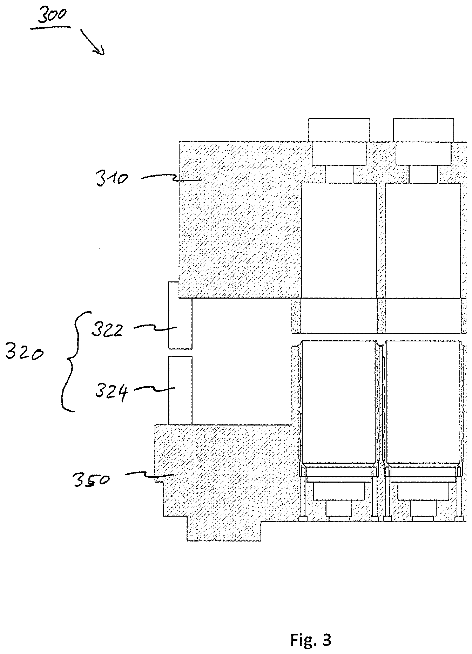

Die Figuren 1a, 1b, 2a und 2b wurden bereits im Zusammenhang mit dem Stand der Technik beschrieben. Es sei auf die dortige Beschreibung verwiesen. Im Folgenden wird anhand von Figur 3 ein Thermoformwerkzeug gemäß der vorliegenden Erfindung näher beschrieben.

Figur 3 zeigt einen Ausschnitt eines Thermoformwerkzeuges 300 zur Herstellung von becherförmigen Gegenständen aus einer erwärmten Kunststofffolie im Querschnitt. Das Thermoformwerkzeug 300 umfasst ein erstes Werkzeugteil 310 und ein zweites Werkzeugteil 350. Gemäß der Darstellung in Figur 3 ist das erste Werkzeugteil 310 ein oberes Werkzeugteil und das zweite Werkzeugteil 350 ein unteres Werkzeugteil des Thermoformwerkzeuges 300. Die Werkzeugteile 310, 350 sind relativ zueinander bewegbar angeordnet. Gemäß der Darstellung in Figur 3 sind in dem zweiten Werkzeugteil 350 mehrere Formräume zur Formung jeweils eines becherförmigen Gegenstandes ausgebildet. Das erste Werkzeugteil 310 und das zweite Werkzeugteil 350 können einige oder sämtliche Merkmale des in Zusammenhang mit den Figuren 1a und 1b beschriebenen oberen Werkzeugteiles 110 bzw. unteren Werkzeugteiles 150 des Thermoformwerkzeuges 100 aufweisen. Für eine nähere Beschreibung der entsprechenden Merkmale sei auf die Beschreibung der Figur 1a verwiesen.

Im Gegensatz zu dem Thermoformwerkzeug 100 in den Figuren 1a und 1b umfasst das Thermoformwerkzeug 300 eine Messeinrichtung 320. Die Messeinrichtung 320 ist dazu ausgebildet ist, eine Verkippung des ersten Werkzeugteiles 310 und des zweiten Werkzeugteiles 350 zueinander zu ermitteln. Die Messeinrichtung 320 umfasst wenigstens einen Sensor 322. Ferner umfasst die Messeinrichtung 320 wenigstens ein Referenzelement 324. Gemäß einer bevorzugten Variante kann die Messeinrichtung 320 des Thermoformwerkzeuges 300 wenigstens zwei voneinander beabstandet angeordnete Sensoren 322 und wenigstens zwei mit jeweils einem der Sensoren 322 korrespondierende Referenzelemente 324 umfassen. Jeder der Sensoren 322 kann dazu ausgebildet sein, einen Messwert bezüglich des wenigstens einen Referenzelementes 324 aufzunehmen, welchem er zugeordnet ist.

Gemäß der Darstellung in Figur 3 ist das wenigstens eine Referenzelement 324 an dem zweiten Werkzeugteil 350 angeordnet und steht von diesem hervor. Alternativ kann das wenigstens eine Referenzelement 324 auch eine Fläche oder ein Flächenabschnitt des zweiten Werkzeugteiles 350 sein. Gemäß einer weiteren Alternative kann das wenigstens eine Referenzelement 324 ein beliebiges Referenzobjekt sein, das mit einer bestimmten Sensorart korrespondiert, sodass durch den wenigstens einen entsprechenden Sensor 322 wenigstens ein Messwert erfasst werden kann, der auf eine Verkippung der Werkzeugteile 310, 350 zueinander hinweist.

Der Messwert kann ein Abstandswert zwischen dem wenigstens einen Sensor 322 und dem mit dem Sensor 322 korrespondierenden Referenzelement 324 sein. Alternativ kann der Messwert ein Wert sein, der unmittelbar auf die Lage der Werkzeugteile 310, 350 zueinander hinweist. Ein solcher Wert kann durch einen Flächenscan eines 3D-Sensors (3D-Scanner) erfasst werden.

Der wenigstens eine Sensor 322 kann ein induktiver, kapazitiver oder optischer Sensor sein. Entsprechend kann der Messwert ein Kapazitätswert, Induktivitätswert oder Laufzeitwert (für die optische Messung) sein, der proportional zu dem zu messenden Abstand ist. Alternativ kann der wenigstens eine Sensor ein 3D-Scanner (d.h. eine Kamera), ein mechanischer Sensor (z.B. mit federgelagertem Messstab), ein Schallsensor, ein Wirbelstromsensor, ein magnetoresistiver Sensor, ein piezo-elektrischer Sensor oder ein Drucksensor sein.

Der wenigstens eine Sensor 322 ist dazu ausgebildet, Messwerte zu erfassen, auf Grundlage derer eine Auswerteeinrichtung (in Figur 3 nicht dargestellt) der Messeinrichtung 320 eine Verkippung der beiden Werkzeugteile 310, 350 zueinander ermitteln kann. Die Auswerteeinrichtung kann wenigstens einen Prozessor (in Fig. 3 ebenfalls nicht dargestellt) umfassen, der dazu ausgebildet ist, die von dem wenigstens einen Sensor bereitgestellten Messwerte zu verarbeiten.

Das Thermoformwerkzeug kann eine optische oder akustische Ausgabeeinrichtung (in Fig. 3 nicht dargestellt) umfassen, die mit der Messeinrichtung in Verbindung steht. Die Ausgabeeinrichtung kann dazu ausgebildet sein, ein optisches oder akustisches Warnsignal auszugeben, wenn eine kritische Verkippung der Werkzeugteile von der Auswerteeinrichtung der Messeinrichtung bestimmt wurde.

Die Messeinrichtung 320 kann ferner dazu ausgebildet sein, über eine Kommunikationsschnittstelle mit einem Benutzerendgerät (beispielsweise ein PC, Tablet oder ein Smartphone) zu kommunizieren. Über das Benutzerendgerät kann die Messeinrichtung 320 Befehle von einem Bediener empfangen. Ebenso können über die Kommunikationsschnittstelle die erfassten Messwerte und/oder die ermittelte Verkippung (z.B. der Verkippungswinkel α) von der Messeinrichtung 320 abgerufen und auf dem Benutzerendgerät (z.B. visuell) übertragen werden.

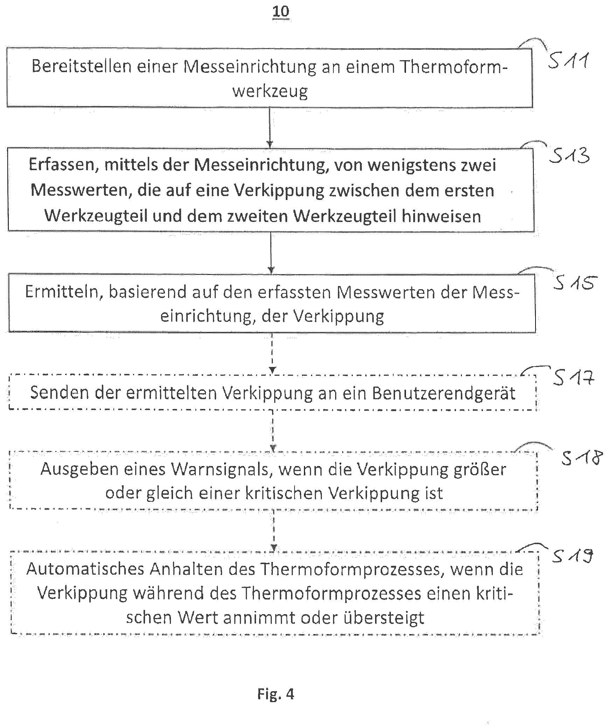

In Zusammenhang mit Figur 4 wird im Folgenden ein Verfahren 10 zum Bestimmen einer Verkippung zwischen einem ersten und einem zweiten Werkzeugteil eines Thermoformwerkzeuges gemäß der vorliegenden Erfindung näher beschrieben.

Das Verfahren 10 umfasst in einem ersten Schritt S11 ein Bereitstellen der oben beschriebenen Messeinrichtung an einem Thermoformwerkzeug. Der Schritt S11 des Bereitstellens der Messeinrichtung umfasst ein Anbringen wenigstens eines Sensors an einem der beiden Werkzeugteile. Insbesondere kann der Schritt des Bereitstellens der Messeinrichtung ein festes Montieren des wenigstens einen Sensors an einem der beiden Werkzeugteile umfassen. Ferner umfasst der Schritt S11 des Bereitstellens der Messeinrichtung ein (festes) Anbringen wenigstens eines Referenzelementes an dem dem jeweiligen Sensor gegenüberliegenden Werkzeugteil umfassen.

Das Verfahren 10 umfasst in einem zweiten Schritt S13 ein Erfassen, mittels der Messeinrichtung, wenigstens eines Messwertes, wobei der wenigstens eine Messwert auf die Verkippung zwischen dem ersten Werkzeugteil und dem zweiten Werkzeugteil hinweist. Der Schritt S13 des Erfassens des wenigstens einen Messwertes erfolgt bezüglich des wenigstens einen Referenzelementes. Ferner kann der Schritt S13 des Erfassens des wenigstens einen Messwertes induktiv, kapazitiv oder optisch (oder, wie oben kurz beschrieben, durch andere Messarten) erfolgen.

In einem dritten Schritt S15 umfasst das Verfahren 10 ein Ermitteln einer Verkippung basierend auf dem wenigstens einen erfassten Messwert der Messeinrichtung. Das Ermitteln der Verkippung kann ein Vergleichen von wenigstens zwei Messwerten umfassen, die durch die Messeinrichtung bereitgestellt wurden. Die wenigstens zwei Messwerte können vorzugsweise von unterschiedlichen Sensoren stammen. Der Schritt des Ermittelns der Verkippung kann ferner das Berechnen eines Verkippungswinkels α zwischen den Werkzeugteilen umfassen.

Das Verfahren 10 kann zusätzlich weitere optionale Verfahrensschritte S17, S18 und/oder S19 in dieser oder einer anderen Reihenfolge umfassen.

Der optionale Verfahrensschritt S17 kann ein Senden der ermittelten Verkippung (z.B. des berechneten Verkippungswinkels α) an ein Benutzerendgerät umfassen. Das Senden kann kontinuierlich während des Thermoformprozesses erfolgen. Eine permanente Übertragung der ermittelten Verkippung kann einen Bediener zu jeder Zeit über die Verkippung (d.h. über das Ausmaß der Verkippung) der Werkzeugteile informieren.

Gemäß dem Verfahrensschritt S18 kann das Verfahren 10 ferner ein Ausgeben eines Warnsignals umfassen, wenn die ermittelte Verkippung (z.B. der Verkippungswinkel α) größer oder gleich einer kritischen Verkippung (z.B. einem kritischen Verkippungswinkel αₖᵣᵢₜ) ist. Das Warnsignal kann ein optisches und/oder ein akustisches Signal umfassen.

Gemäß dem Verfahrensschritt S19 kann das Verfahren 10 ferner ein automatisches Anhalten des Thermoformprozesses umfassen, wenn die ermittelte Verkippung während des Thermoformprozesses einen kritischen Wert annimmt oder übersteigt. Insbesondere kann das automatische Anhalten des Maschinenbetriebs erfolgen, wenn der berechnete Verkippungswinkel α größer oder gleich dem kritischen Verkippungswinkel aₖᵣᵢₜ ist. Das Anhalten des Thermoformprozesses kann ein Abschalten der Thermoformmaschine umfassen, in die das Thermoformwerkzeug eingebaut ist.

Es versteht sich, dass das Verfahren zum Bestimmen der Verkippung zwischen dem ersten und dem zweiten Werkzeugteil des Thermoformwerkzeuges auch im Stillstand der Thermoformmaschine, in die das Thermoformwerkzeugt eingebaut ist, durchgeführt werden kann.

Mit der erfindungsgemäßen Technik können Verkippungen von in Thermoformmaschinen eingebauten Werkzeugteilen schnell (und präzise) detektiert werden. Dadurch, dass die Messeinrichtung im Thermoformwerkzeug dauerhaft montiert ist, kann die Ausrichtung der Thermoformwerkzeuge zueinander auch während des Betriebs der Thermoformmaschine (d.h. während des Thermoformprozesses) überprüft werden. Somit wird eine permanente Überwachung der Werkzeugteile erst ermöglicht. Durch die permanente Überwachung können kritische Verkippungen der Werkzeugteile zueinander frühzeitig erkannt und behoben werden, wodurch insgesamt der Verschleiß der Werkzeugteile verringert wird.

## Patentansprüche

1. Thermoformwerkzeug (300) zur Herstellung von becherförmigen Gegenständen aus einer erwärmten Kunststofffolie umfassend ein erstes Werkzeugteil (310) und ein zweites Werkzeugteil (350), die relativ zueinander bewegbar sind, wobei in einem der beiden Werkzeugteile (310, 350) wenigstens ein Formraum zur Formung eines becherförmigen Gegenstandes ausgebildet ist, **dadurch gekennzeichnet, dass** das Thermoformwerkzeug (300) eine Messeinrichtung (320) umfasst, die dazu ausgebildet ist, eine Verkippung des ersten und des zweiten Werkzeugteils (310, 350) zueinander zu ermitteln, wobei die Messeinrichtung (320) umfasst:
wenigstens einen Sensor (322), wobei der wenigstens eine Sensor (322) an einem der beiden Werkzeugteile (310, 350) angeordnet ist und dazu ausgebildet ist, wenigstens einen Messwert zu erfassen, der auf eine Verkippung des ersten Werkzeugteils (310) und des zweiten Werkzeugteils (350) zueinander hinweist; und
wenigstens ein dem wenigstens einen Sensor (322) zugeordnetes Referenzelement (324), das an dem dem jeweiligen Sensor (322) gegenüberliegenden Werkzeugteil (310, 350) angeordnet ist, wobei der wenigstens eine Sensor (322) dazu ausgebildet ist, den wenigstens einen Messwert bezüglich des wenigstens einen Referenzelementes (324) zu erfassen.

2. Thermoformwerkzeug (300) nach Anspruch 1, **dadurch gekennzeichnet, dass** jeder des wenigstens einen Sensors (322) an demselben Werkzeugteil (310, 350) angeordnet ist.

3. Thermoformwerkzeug (300) nach Anspruch 1 oder 2, **dadurch gekennzeichnet, dass** die Messeinrichtung (320) wenigstens zwei Sensoren (322) und wenigstens zwei Referenzelemente (324) umfasst, wobei jeder der wenigstens zwei Sensoren (322) dazu ausgebildet ist, einen Abstand zu jenem Referenzelement (324) zu messen, dem er zugeordnet ist.

4. Thermoformwerkzeug (300) nach einem der Ansprüche 1 bis 3, **dadurch gekennzeichnet, dass** der wenigstens eine Sensor (322) ein induktiver, kapazitiver, oder optischer Sensor ist.

5. Thermoformwerkzeug (300) nach einem der Ansprüche 1 bis 4, **dadurch gekennzeichnet, dass** die Messeinrichtung (320) ferner eine Auswerteeinrichtung umfasst, die dazu ausgebildet ist, anhand des wenigstens eines erfassten Messwertes, die Verkippung der beiden Werkzeugteile (310, 350) zueinander zu ermitteln.

6. Thermoformwerkzeug (300) nach einem der vorhergehenden Ansprüche, **dadurch gekennzeichnet, dass** das Thermoformwerkzeug (300) ferner eine optische oder akustische Ausgabeeinrichtung umfasst, die mit der Messeinrichtung (320) in Verbindung steht und die dazu ausgebildet ist, ein optisches oder akustisches Warnsignal auszugeben, wenn die ermittelte Verkippung einen vorgegebenen Grenzwert übersteigt.

7. Thermoformwerkzeug (300) nach einem der vorhergehenden Ansprüche, **dadurch gekennzeichnet, dass** die Messeinrichtung (320) ferner eine Kommunikationsschnittstelle umfasst, um einen Datentransfer zwischen der Messeinrichtung (320) und einem Benutzerendgerät zu ermöglichen.

8. Thermoformmaschine zur Herstellung von becherförmigen Gegenständen aus einer erwärmten Kunststofffolie, umfassend:
das Thermoformwerkzeug (300) gemäß einem der Ansprüche 1 bis 7.

9. Verfahren zum Bestimmen einer Verkippung zwischen einem ersten und einem zweiten Werkzeugteil (310, 350) eines Thermoformwerkzeuges (300), umfassend die folgenden Verfahrensschritte:
Bereitstellen einer Messeinrichtung (320) an dem Thermoformwerkzeug (300), wobei der Schritt des Bereitstellens der Messeinrichtung (320) ein Anbringen wenigstens eines Sensors (322) an einem der beiden Werkzeugteile (310, 350) umfasst;
Erfassen, mittels des wenigstens einen Sensors (322) der Messeinrichtung (320), wenigstens eines Messwertes, der auf die Verkippung zwischen dem ersten Werkzeugteil (310) und dem zweiten Werkzeugteil (350) hinweist, wobei der Schritt des Erfassens des wenigstens einen Messwertes bezüglich wenigstens eines Referenzelementes (324) erfolgt, das an dem dem jeweiligen Sensor (322) gegenüberliegenden Werkzeugteil (310, 350) angeordnet ist; und
Ermitteln, basierend auf dem wenigstens einen erfassten Messwert der Messeinrichtung (320), der Verkippung der beiden Werkzeugteile (310, 350) zueinander.

10. Verfahren nach Anspruch 9, wobei der Schritt des Erfassens des wenigstens einen Messwertes induktiv, kapazitiv, oder optisch erfolgt.

11. Verfahren nach einem der Ansprüche 9 bis 10, wobei wenigstens zwei Messwerte durch die Messeinrichtung (320) bereitgestellt werden und wobei der Schritt des Ermittelns der Verkippung ein Vergleichen der wenigstens zwei Messwerte umfasst.

12. Verfahren nach einem der Ansprüche 9 bis 11, wobei das Verfahren im Stillstand und/oder während des Betriebs des Thermoformwerkzeugs (300) durchgeführt wird.

## Claims

1. A thermoforming mould (300) for producing cup-shaped articles from a heated film of plastic comprising a first mould part (310) and a second mould part (350), which are movable in relation to one another, wherein at least one cavity for moulding a cup-shaped article is formed in one of the two mould parts (310, 350), **characterized in that** the thermoforming mould (300) comprises a measuring device (320) which is designed to determine a tilting of the first and the second mould parts (310, 350) with respect to one another, wherein the measuring device (320) comprises:
at least one sensor (322), wherein the at least one sensor (322) is arranged on one of the two mould parts (310, 350) and is designed to record at least one measured value that indicates a tilting of the first mould part (310) and the second mould part (350) with respect to one another; and
at least one reference element (324) associated with the at least one sensor (322) and arranged on the mould part (310, 350) opposing the specific sensor (322), wherein the at least one sensor (322) is designed to record the at least one measured value for the at least one reference element (324).

2. Thermoforming mould (300) according to claim 1, **characterized in that** each of the at least one sensors (322) is arranged on the same mould part (310, 350).

3. Thermoforming mould (300) according to claim 1 or 2, **characterized in that** the measuring device (320) comprises at least two sensors (322) and at least two reference elements (324), wherein each of the at least two sensors (322) is designed to measure a distance to the reference element (324) with which it is associated.

4. Thermoforming mould (300) according to one of claims 1 to 3, **characterized in that** the at least one sensor (322) is an inductive, capacitive, or optical sensor.

5. Thermoforming mould (300) according to one of claims 1 to 4, **characterized in that** the measuring device (320) furthermore comprises an evaluation device that is designed to determine the tilting of the two mould parts (310, 350) with respect to one another using the at least one recorded measured value.

6. Thermoforming mould (300) according to one of the preceding claims, **characterized in that** the thermoforming mould (300) furthermore comprises an optical or acoustic output device that is connected to the measuring device (320) and that is designed to output an optical or acoustic warning signal if the determined tilting exceeds a pre-specified limit.

7. Thermoforming mould (300) according to one of the preceding claims, **characterized in that** the measuring device (320) furthermore comprises a communication interface in order to enable a data transfer between the measuring device (320) and a user end device.

8. Thermoforming machine for producing cup-shaped articles from a heated film of plastic, comprising:
the thermoforming mould (300) according to one of claims 1 to 7.

9. Method for determining a tilting between a first and a second mould part (310, 350) of a thermoforming mould (300), comprising the following method steps:
providing a measuring device (320) on the thermoforming mould (300), wherein the step of providing the measuring device (320) comprises attaching at least one sensor (322) to one of the two mould parts (310, 350);
recording, by means of the at least one sensor (322) of the measuring device (320), at least one measured value that indicates the tilting between the first mould part (310) and the second mould part (350), wherein the step of recording the at least one measured value occurs for at least one reference element (324) that is arranged on the mould part (310, 350) opposing the specific sensor (322); and
determining, based on the at least one recorded measured value of the measuring device (320), the tilting of the two mould parts (310, 350) with respect to one another.

10. Method according to claim 9, wherein the step of recording the at least one measured value takes place in an inductive, capacitive, or optical manner.

11. Method according to one of claims 9 to 10, wherein at least two measured values are provided by the measuring device (320) and wherein the step of determining the tilting comprises comparing the at least two measured values.

12. Method according to one of claims 9 to 11, wherein the method is carried out while the thermoforming mould (300) is stopped and/or during its operation.

## Revendications

1. Moule de thermoformage (300) pour la fabrication d'objets en forme de gobelet à partir d'une feuille de matière plastique chauffée, comprenant une première partie de moule (310) et une seconde partie de moule (350) qui sont mobiles l'une par rapport à l'autre, dans lequel au moins une cavité de formage destinée au formage d'un objet en forme de gobelet est réalisée dans l'une des deux parties de moule (310, 350), **caractérisé en ce que** le moule de thermoformage (300) comprend un dispositif de mesure (320) qui est conçu pour déterminer un basculement de la première et de la seconde partie de moule (310, 350) l'une par rapport à l'autre, dans lequel le dispositif de mesure (320) comprend :
au moins un capteur (322), dans lequel l'au moins un capteur (322) est situé sur l'une des deux parties de moule (310, 350) et est conçu pour saisir au moins une valeur de mesure qui indique un basculement de la première partie de moule (310) et de la seconde partie de moule (350) l'une par rapport à l'autre ; et
au moins un élément de référence (324) associé à l'au moins un capteur (322), qui est situé sur la partie de moule (310, 350) opposée au capteur respectif (322), dans lequel l'au moins un capteur (322) est conçu pour saisir l'au moins une valeur de mesure par rapport à l'au moins un élément de référence (324).

2. Moule de thermoformage (300) selon la revendication 1, **caractérisé en ce que** chacun des, au moins un, capteurs (322) est situé sur la même partie de moule (310, 350).

3. Moule de thermoformage (300) selon la revendication 1 ou 2, **caractérisé en ce que** le dispositif de mesure (320) comprend au moins deux capteurs (322) et au moins deux éléments de référence (324), dans lequel chacun des au moins deux capteurs (322) est conçu pour mesurer une distance par rapport à l'élément de référence (324) auquel il est associé.

4. Moule de thermoformage (300) selon l'une des revendications 1 à 3, **caractérisé en ce que** l'au moins un capteur (322) est un capteur inductif, capacitif ou optique.

5. Moule de thermoformage (300) selon l'une des revendications 1 à 4, **caractérisé en ce que** le dispositif de mesure (320) comprend en outre un dispositif d'évaluation qui est conçu pour déterminer le basculement des deux parties de moule (310, 350) l'une par rapport à l'autre d'après l'au moins une valeur de mesure saisie.

6. Moule de thermoformage (300) selon l'une des revendications précédentes, **caractérisé en ce que** le moule de thermoformage (300) comprend en outre un dispositif de sortie optique ou acoustique qui est connecté au dispositif de mesure (320) et qui est conçu pour délivrer en sortie un signal d'alarme optique ou acoustique lorsque le basculement déterminé dépasse une valeur limite prédéterminée.

7. Moule de thermoformage (300) selon l'une des revendications précédentes, **caractérisé en ce que** le dispositif de mesure (320) comprend en outre une interface de communication pour permettre un transfert de données entre le dispositif de mesure (320) et un terminal d'utilisateur.

8. Machine de thermoformage pour la fabrication d'objets en forme de gobelet à partir d'une feuille de matière plastique chauffée, comprenant : le moule de thermoformage (300) selon l'une des revendications 1 à 7.

9. Procédé permettant de déterminer un basculement entre une première et une seconde partie de moule (310, 350) d'un moule de thermoformage (300), comprenant les étapes de procédé suivantes :
mise à disposition d'un dispositif de mesure (320) sur le moule de thermoformage (300), dans lequel l'étape de mise à disposition du dispositif de mesure (320) comprend une mise en place d'au moins un capteur (322) sur une des deux parties de moule (310, 350) ;
saisie, au moyen de l'au moins un capteur (322) du dispositif de mesure (320), d'au moins une valeur de mesure qui indique le basculement entre la première partie de moule (310) et la seconde partie de moule (350), dans lequel l'étape de saisie de l'au moins une valeur de mesure s'effectue par rapport à au moins un élément de référence (324) qui est situé sur la partie de moule (310, 350) opposée au capteur respectif (322) ; et
détermination, sur la base de l'au moins une valeur de mesure saisie du dispositif de mesure (320), du basculement des deux parties de moule (310, 350) l'une par rapport à l'autre.

10. Procédé selon la revendication 9, dans lequel l'étape de saisie de l'au moins une valeur de mesure s'effectue de manière inductive, capacitive ou optique.

11. Procédé selon l'une des revendications 9 à 10, dans lequel au moins deux valeurs de mesure sont fournies par le dispositif de mesure (320) et dans lequel l'étape de détermination du basculement comprend une comparaison des au moins deux valeurs de mesure.

12. Procédé selon l'une des revendications 9 à 11, dans lequel le procédé est exécuté alors que le moule de thermoformage (300) est à l'arrêt et/ou pendant son fonctionnement.
